(19) Europäisches Patentamt
European Patent Office
Office européen des brevets

(11) **EP 3 293 571 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(51) Int Cl.:
**G03B 15/07** *(2006.01)*    **G03B 15/06** *(2006.01)*

(21) Anmeldenummer: **16188488.7**

(22) Anmeldetag: **13.09.2016**

(54) **BELEUCHTUNGSSYSTEM UND ABBILDUNGSSYSTEM**

LIGHTING SYSTEM AND IMAGING SYSTEM

SYSTÈME D'ÉCLAIRAGE ET SYSTÈME D'IMAGERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.03.2018 Patentblatt 2018/11**

(73) Patentinhaber:
- **SICK AG**
  **79183 Waldkirch/Breisgau (DE)**
- **Fraunhofer-Gesellschaft zur Förderung der angewandten Forschung e.V.**
  **80686 München (DE)**

(72) Erfinder:
- **PFISTER, Thorsten**
  **79111 Freiburg (DE)**
- **HOFMANN, Christoph**
  **79194 Gundelfingen (DE)**
- **HAMMES, Markus**
  **79117 Freiburg (DE)**
- **BODEMANN, Axel**
  **07743 Jena (DE)**
- **SCHREIBER, Peter**
  **07749 Jena (DE)**
- **LI, Chen**
  **07747 Jena (DE)**

(74) Vertreter: **Manitz Finsterwald Patentanwälte PartmbB**
**Martin-Greif-Strasse 1**
**80336 München (DE)**

(56) Entgegenhaltungen:
JP-A- H05 107 638     US-A1- 2005 265 014
US-A1- 2007 001 104     US-A1- 2014 185 018

**Beschreibung**

Die vorliegende Erfindung betrifft ein Beleuchtungssystem zur Beleuchtung eines Objektfeldes, insbesondere zur Beleuchtung einer Szene, mit einer Lichtquelle und mit einer Kondensoranordnung zum Bündeln des von der Lichtquelle emittierten Lichts. Die Erfindung betrifft ferner ein Abbildungssystem mit einem derartigen Beleuchtungssystem.

Zum Beispiel für die Nutzung von Bildverarbeitungssystemen, insbesondere in industriellen Anwendungen, wird ein Objekt, eine Szene oder ein Messfeld mit Hilfe eines Bildsensors aufgenommen, wobei der Bildsensor zur Aufnahme von Standbildern und/oder Bewegtbildern ausgelegt sein kann. Bei den aufgenommenen Bildern kann es sich um zweidimensionale Bilder oder auch um dreidimensionale Bilder handeln, welche zusätzlich auch Informationen über die Bildtiefe enthalten. Der Bildsensor kann insbesondere als sogenannter Vision-Sensor, insbesondere 3D-Vision-Sensor, ausgestaltet sein. Bei einem 3D-Vision-Sensor wird die Tiefeninformation beispielsweise nach dem Lichtlaufzeitprinzip ermittelt. Ein solcher Bildsensor wird auch als TOF-Sensor (Time-of-Flight-Sensor) bezeichnet. Weiterhin sind auch 3D-Bildsensoren bekannt, die die Tiefeninformation stereoskopisch erzeugen.

In der Regel umfassen derartige Bildverarbeitungssysteme ein Beleuchtungssystem, welches eine gleichmäßige und reproduzierbare Ausleuchtung des Objekts, der Szene oder des Messfeldes gewährleisten muss. Insbesondere bei der Aufnahme von dreidimensionalen Bildern ist es zur Vermeidung von Messfehlern bei der Gewinnung der Tiefeninformation erforderlich, dass - von objektbezogenen Helligkeitsunterschieden abgesehen - den Bildsensor eine möglichst gleichmäßige Lichtverteilung erreicht.

Konventionelle Objektive oder Linsensysteme, wie sie sowohl im Lichtpfad des Beleuchtungssystems als auch im Abbildungslichtpfad innerhalb eines Empfangssystems eingesetzt werden, weisen jedoch einen Randlichtabfall auf, der dazu führt, dass Randbereiche und insbesondere Eckbereiche des aufgenommenen Bildes auf dem Bildsensor dunkler erscheinen als die Bildmitte. Somit erhöht sich insbesondere bei den genannten 3D-Bildsensoren die Messgenauigkeit bezüglich der Tiefeninformation in den Randbereichen und insbesondere in den Bildecken. Die durch den Randlichtabfall verursachte Messungenauigkeit beruht hauptsächlich auf einer geringeren Aussteuerung des Bildsensors in den Rand- bzw. Eckbereichen, was zu einem Kontrastverlust und einem verringerten Signalzu-Rausch-Verhältnis führt.

Die US 2014/185018 A1 beschreibt einen Projektor mit einem Beleuchtungssystem und einem räumlichen Lichtmodulator (beispielsweise ein digital mirror device), bei dem mit Hilfe eines kubischen optischen Bauteils eine Randlichterhöhung erfolgt. Mittels des optischen Bauteils kann auch ein Randlichtabfall des Abbildungssystems kompensiert werden.

Die US 2007/001104 A1 befasst sich in ähnlicher Weise mit einem Videoprojektor, welcher eine Vorrichtung zur Randlichtüberhöhung aufweist. Als Beispiele für solche Einrichtungen zur Randlichtüberhöhung werden Transmissionsfilter und konisch zulaufende Stäbe beschrieben.

Die US 2005/265014 A1 beschreibt eine Beleuchtungseinrichtung für einen Fotoapparat ähnlich einem Blitzlicht, welche eine Vielzahl von LEDs umfasst. Bei einem Ausführungsbeispiel ist zusätzlich auch eine den LEDs vorgeordnete Linse vorgesehen. Eine möglichst homogene Ausleuchtung im Objektfeld wird durch entsprechende Anpassung der LED-Ströme erreicht.

Die JP H05 107638 A befasst sich mit der Kontrastanpassung eines Videoprojektors an die Umgebungshelligkeit.

Es ist die Aufgabe der vorliegenden Erfindung, ein Beleuchtungssystem sowie ein Abbildungssystem anzugeben, bei denen die vorstehend genannten Nachteile vermieden werden.

Die Lösung der Aufgabe erfolgt durch ein Beleuchtungssystem mit den Merkmalen des Anspruchs 1. Es ist vorgesehen, dass die Kondensoranordnung eine Freiformlinse umfasst, welche dazu ausgelegt ist, das Objektfeld derart zu beleuchten, dass die Lichtintensität des Beleuchtungslichts in dem Objektfeld zu Randbereichen des Objektfeldes hin zunimmt. Unter dem beleuchteten Objektfeld wird derjenige Teilbereich einer von dem Beleuchtungssystem ausgeleuchteten Fläche verstanden, der zur Abbildung durch ein zugeordnetes Empfangssystem vorgesehen ist. Das Beleuchtungssystem kann als separate Vorrichtung ausgebildet sein oder Bestandteil eines Bildverarbeitungssystems oder abbildenden optischen Systems sein. Freiformlinsen sind Linsen mit einer komplexen, insbesondere nichtrotationssymmetrisch geformten Oberfläche. Derartige Freiformlinsen ermöglichen gegenüber herkömmlichen sphärischen oder asphärischen Linsen ein wesentlich flexibleres optisches Design. Durch Verwendung einer derartigen Freiformlinse in der Kondensoranordnung des erfindungsgemäßen Beleuchtungssystems wird erreicht, dass das Objektfeld in seinen Randbereichen und insbesondere in seinen Eckbereichen heller ausgeleuchtet wird als in der Bildmitte. Dadurch wird dem Randlichtabfall zumindest eines im Empfangssystem vorhandenen Objektivs entgegengewirkt, wobei dies ohne Verwendung von aktiv angesteuerten Elementen (z.B. DMDs, digital mirror devices, Mikrospiegelarrays) erfolgt, so dass das Beleuchtungssystem besonderes ausfallsicher und damit insbesondere für sicherheitsrelevante Anwendungen einsetzbar ist. Ferner wird durch die im Mittelbereich verringerte Lichtintensität die Problematik des Auftretens von Mittenreflexen beim senkrechten Auftreffen von Lichtstrahlen auf glänzende Objektoberflächen reduziert.

Das Beleuchtungssystem kann für den Einsatz sowohl einer monochromatischen als auch einer polychromatischen Lichtquelle ausgelegt sein.

Vorteilhafterweise ist die Freiformlinse derart ausgelegt, dass die Lichtintensität der Beleuchtung in dem Objektfeld zu Randbereichen des Objekts hin um ein Maß zunimmt, welches einen Randlichtabfall zumindest eines einen Bildsensor aufweisenden Empfangssystems, welches zur Abbildung zumindest des Objektfeldes vorgesehen ist, kompensiert. Die Kompensation erfolgt insbesondere derart, dass das Bildfeld des Empfangssystems zumindest im Bereich des Bildsensors eine homogene Intensitätsverteilung aufweist, wenn das Objektfeld oder ein über das Objektfeld homogen remittierendes Objekt auf den Bildsensor abgebildet wird. Dazu wird die Freiformlinse vorteilhafterweise auf das im Empfangssystem verwendete Objektiv abgestimmt. Für die Kompensation des Randlichtabfalls ist es ausreichend, dass der Randlichtabfall lediglich in dem Objektfeld, d.h. dem von Bildsensor erfassten Teilbereich der gesamten von dem Beleuchtungssystem beleuchteten Fläche, kompensiert wird. Die Lichtintensität muss demnach nicht über die gesamte Fläche zu den Randbereichen hin ansteigen, sondern kann auch zu Randbereichen der beleuchteten Fläche hin wieder etwas abfallen, sofern die Bereiche, in denen die Lichtintensität abnimmt oder zumindest gleich bleibt, außerhalb des Objektfeldes liegen.

Die genannte Kompensierung des Randlichtabfalls kann nicht nur einen Randlichtabfall des Empfangssystems kompensieren, sondern auch einen Randlichtabfall berücksichtigen, der durch optische Elemente des Beleuchtungssystems verursacht wird, die der Freiformlinse in Ausbreitungsrichtung des Lichts auf seinem Strahlengang zum Objekt nachgeordnet sind. Insbesondere kann der Randlichtabfall einer nachstehend noch näher erläuterten weiteren Kondensoroptik oder eines zusätzlichen Projektionsobjektivs bei der Auslegung der Freiformlinse berücksichtigt werden.

Insbesondere kann ein Randlichtabfall kompensiert werden, der den Gesetzmäßigkeiten des sogenannten "cos⁴-Gesetz" folgt. Dieses $\cos^4$-Gesetz beschreibt den natürlichen Randlichtabfall und besagt, dass die Bildhelligkeit beim Abbilden eines gleichmäßig hellen Motivs durch ein Objektiv in einen Bildpunkt mit einem Faktor $\cos^4$ bezogen auf den Abstand dieses Bildpunkts von der Bildmitte gegenüber der Helligkeit in der Bildmitte abnimmt. Allerdings gilt dieses Gesetz nur unter den Voraussetzungen, dass die Abbildung verzeichnungsfrei ist, das Objektiv nicht vignettiert und keine Pupillenaberration aufweist und sonstige Lichtverluste, etwa durch Reflexion an Linsenoberflächen, vernachlässigt werden können. Die Verwendung von Freiformlinsen gestattet hierbei, dass auch solche Randlichtabfälle kompensiert werden können, die komplexeren Funktionsverläufen gehorchen.

Bei einer vorteilhaften Ausführungsform ist die Freiformlinse derart ausgelegt, dass sich die minimale und die maximale Lichtintensität in dem beleuchteten Objektfeld mindestens um einen Faktor 1,5, bevorzugt mindestens um einen Faktor 2, besonders bevorzugt mindestens um einen Faktor 3 unterscheiden. Demnach ist die Lichtintensität in den Randbereichen des beleuchteten Objektfelds mindestens eineinhalb bis dreimal so hoch wie in einem zentralen Bereich. Durch die genannte eineinhalb bis dreifache Randlichtüberhöhung kann insbesondere der Randlichtabfall eines Abbildungssystems oder Bildverarbeitungssystems vollständig kompensiert werden, welches sowohl das Beleuchtungssystem als auch ein Empfangssystem umfasst. Grundsätzlich ist aber auch ein geringeres Verhältnis zwischen maximaler und minimaler Lichtintensität (z.B. >1) denkbar, wenn zum Beispiel der Randlichtabfall geringer ist und/oder in Kauf genommen werden kann, dass er durch die Freiformlinse nicht vollständig kompensiert wird.

Vorteilhafterweise ist die Freiformlinse ferner dazu ausgelegt, in dem Objektfeld eine vorgegebene Lichtverteilung, insbesondere eine einen Gradienten aufweisende Lichtverteilung, zusätzlich zu der genannten Zunahme der Lichtintensität der Beleuchtung in dem Objektfeld zu Randbereichen des Objektfeldes hin zu erzeugen. Damit wird der Tatsache Rechnung getragen, dass auch solche inhomogenen Lichtverteilungen in der Ebene des Bildsensors kompensiert werden können, die nicht auf den natürlichen Randlichtabfall des Empfangssystems und/oder der Freiformlinse nachgeordneter Optiken des Beleuchtungssystems zurückzuführen sind. Insbesondere können auch solche Lichtverteilungen kompensiert werden, die auf einen durch eine Kippung der Bildebene des Empfangssystems gegenüber der Objektfeldebene verursachten Lichtgradienten zurückzuführen sind. Ferner kann eine Anpassung der Lichtverteilung an eine vorgegebene bestimmte Form und/oder Topographie des Objektfeldes erfolgen.

Gemäß einer weiteren vorteilhaften Ausführungsform der Erfindung umfasst die Kondensoranordnung ferner eine weitere Kondensoroptik, welche in Ausbreitungsrichtung des von der Lichtquelle emittierten Lichts betrachtet hinter der Freiformlinse angeordnet ist und dazu ausgelegt ist, die Freiformlinse verlassendes Licht zu kollimieren und/oder die Hauptstrahlwinkel anzupassen. Diese weitere Kondensoroptik kann beispielsweise alleine oder im Zusammenwirken mit der Freiformlinse eine Anpassung des Beleuchtungssystems an ein nachgeordnetes Projektionsobjektiv hinsichtlich des Lichtfeldes und des Öffnungswinkels bewirken, wobei die Etendue erhalten bleibt. Die Etendue beschreibt die Ausdehnung eines Strahlenbündels auf der Grundlage des Querschnitts und des Raumwinkels des Strahlenbündels. Es erfolgt eine Anpassung des Hauptstrahlwinkels an das Projektionsobjektiv. Die weitere Kondensoroptik kann zum Beispiel als Sammellinse oder als Sammellinsensystem ausgestaltet sein, wobei eine oder mehrere sphärische und/oder asphärische Linsen und/oder Freiformlinsen zum Einsatz gelangen können, die insbesondere auch als Fresnellinsen ausgeführt sein können. Beispielsweise kann ein Linsenpaar mit einer sphärischen Linse und einer Feldlinse vorgesehen sein.

Die Freiformlinse ist auf der der Lichtquelle zugewandten Seite der Kondensoranordnung angeordnet.

Anstelle einer separaten weiteren Kondensoroptik können die Freiformlinse und die weitere Kondensoroptik auch funktional in einem einzigen monolithischen optischen Element zusammengefasst sein.

Das genannte Projektionsobjektiv, insbesondere zum Beispiel ein Zoom-Projektionsobjektiv, kann zusätzlich oder alternativ zu der genannten weiteren Kondensoroptik vorhanden sein. Das Projektionsobjektiv kann dazu vorgesehen sein, um die Größe der von dem Beleuchtungssystem ausgeleuchteten Fläche an die jeweilige zu beleuchtende Szene anzupassen.

Die Freiformlinse kann beispielsweise als Konvexlinse mit zumindest einer konvexen Seite, insbesondere als Bikonvexlinse, ausgebildet sein, wobei die konvexe Seite oder zumindest eine der konvexen Seiten als Freiformfläche ausgebildet ist. Die Freiformfläche ist demnach konvex gekrümmt. Die der Freiformfläche gegenüberliegende Seite der Freiformlinse kann beispielsweise sphärisch oder asphärisch sein. Alternativ kann die Freiformlinse auch als Plankonvexlinse oder Konkavkonvexlinse ausgebildet sein, so dass die der Freiformfläche gegenüberliegende Seite plan oder konkav gekrümmt ist.

Vorteilhafterweise ist die Freiformfläche der Lichtquelle zugewandt.

Gemäß einer vorteilhaften Ausgestaltung der Erfindung ist die Krümmung der Freiformfläche durch ein Polynom vierten oder höheren Grades, bevorzugt durch ein Polynom sechsten bis achten Grades, insbesondere durch ein Polynom sechsten Grades bestimmt. Die Freiformfläche wird beispielsweise durch eine Polynomfunktion Z (X, Y) beschrieben, wobei durch die Koordinaten X, Y und Z ein Punkt auf der Linsenoberfläche in einem kartesischen Koordinatensystem mit der optischen Achse des Beleuchtungssystems entlang der Z-Richtung definiert wird. Z beschreibt den Abstand der Oberfläche der Freiformfläche von einer lotrecht auf der optischen Achse stehenden Referenzebene bei einem Koordinatenpaar (X, Y).

Vorteilhafterweise ist das Polynom ein Polynom in den Variablen X und Y, wobei das Polynom zumindest eine der folgenden Bedingungen erfüllt:

- Koeffizienten derjenigen Monome, bei denen zumindest ein Exponent der Variablen ungerade ist, weisen den Wert 0 auf;
- der Koeffizient eines Monoms mit den Variablen $X^i$, $Y^j$ und der Koeffizient eines Monoms mit den Variablen $X^j$, $Y^i$ weisen bei gleichem i und gleichem j dasselbe Vorzeichen auf; und
- die zweite Ableitung des Polynoms weist keine Nullstellen auf.

Dabei wird der Begriff "Monom" hier derart verwendet, dass das Polynom aus einer Summe von Monomen besteht, also die Monome die Summanden des Polynoms darstellen, wobei das Polynom als

$$\sum_{ij} a_{ij} \cdot X^i \cdot Y^j$$

dargestellt ist (mit den Koeffizienten $a_{ij}$).

Aus der erstgenannten Bedingung, wonach Koeffizienten derjenigen Monome, bei denen zumindest ein Exponent der Variablen ungerade ist, den Wert 0 aufweisen, ergibt sich, dass die Polynomfunktion mindestens zwei Symmetrieebenen aufweist, nämlich die XZ-Ebene und YZ-Ebene. Aus der letztgenannten Bedingung, wonach die zweite Ableitung des Polynoms keine Nullstellen aufweist, ergibt sich, dass die Freiformfläche vorzugsweise keine Wendepunkte aufweist.

Es ist auch möglich, die Polynome in Polarkoordinaten anstelle der vorstehend erwähnten kartesischen Koordinaten darzustellen. Zudem sind Definitionen mit sagittal-orthogonalen oder gradienten-orthogonalen Entwicklungen sowie anderen Polynomdarstellungen möglich.

Es hat sich als vorteilhaft erwiesen, wenn die Lichtquelle eine Flächenlichtquelle, insbesondere ein Array von mehreren Einzellichtquellen, bevorzugt ein Array von mehreren LEDs oder mehreren Lasern, ist. Als Lichtquelle kann beispielsweise ein sogenanntes VCSEL-Array (von englisch: "vertical-cavity-surface-emitting laser", Oberflächenemitter) verwendet werden. Die Lichtquelle kann jedoch auch eine Einzellichtquelle, insbesondere eine LED oder ein Laser, sein.

Nach einer weiteren vorteilhaften Ausführungsform ist die Freiformlinse ferner dazu ausgelegt, den Strahlengang des Beleuchtungssystems derart anzupassen, dass die Flächenform des beleuchteten Objektfeldes von der Flächenform einer Lichtaustrittsfläche der Lichtquelle oder einer den Strahlengang begrenzenden Blende, die z.B. zwischen der Lichtquelle und der Freiformlinse vorgesehen sein kann, derart abweicht, dass die genannten Flächenformen bezüglicher ihrer Umgrenzungen nicht durch eine geometrische Ähnlichkeitsabbildung ineinander überführt werden können. Es kann auf diese Weise ein abbildendes anamorphotisches Beleuchtungssystem gebildet werden. Hierdurch kann z.B. das Seitenverhältnis des beleuchteten Objektfeldes an das Seitenverhältnis eines zur Aufnahme des Objektfeldes vorgesehenen Bildsensors angepasst werden. Dies ist insbesondere dann von Vorteil, wenn eine Flächenlichtquelle verwendet wird, deren Seitenverhältnis nicht mit dem Seitenverhältnis des zur Aufnahme des Objektfeldes vorgesehenen Bildsensors übereinstimmt. Dadurch kann ein größtmöglicher Anteil der von der Lichtquelle emittierten Lichtintensität in das beleuchtete Objektfeld gelenkt werden. Lichtverluste, die dadurch entstehen, dass vom Bildsensor nicht erfasste Bereiche der Szene beleuchtet werden, werden somit weitgehend vermieden. So kann etwa die Lichtaustrittsfläche der Lichtquelle rechteckig sein, wobei die Freiformlinse ferner dazu ausgelegt ist, den Strahlengang des Beleuchtungssystems derart anzupassen, dass das beleuchtete Objektfeld ein von dem Seitenverhältnis der Lichtaustrittsfläche abweichendes Seitenverhältnis aufweist.

Bei den genannten Ausführungsformen ist demnach die Freiformlinse anamorphotisch. Grundsätzlich kann die Freiformlinse jedoch auch rotationssymmetrisch ausgestaltet sein, wenn eine derartige Anpassung der beleuchteten Fläche bzw. des Seitenverhältnisses nicht benötigt wird.

Nach einer weiteren vorteilhaften Ausführungsform weist das Beleuchtungssystem Mittel zur Strukturierung der Beleuchtung in dem Objektfeld, insbesondere ein Mikrolinsenarray, auf. Mit Hilfe der Mittel zur Strukturierung kann beispielsweise ein Punktlichtmuster oder ein Streifenmuster auf dem zu beleuchtenden Objekt bzw. in dem Objektfeld erzeugt werden. Als weitere Mittel zur Strukturierung können beispielsweise ein Mikrospiegelarray, ein diffraktives optisches Element (DOE) oder ein teiltransparentes Muster, welches nach Art eines Dias an geeigneter Stelle in den Strahlengang des Beleuchtungssystems eingefügt wird, verwendet werden. Weitere geeignete Strukturierungsmittel sind ein räumlicher Modulator für Licht (SLM, von englisch: **S**patial **L**ight **M**odulator) oder ein LCoS-Display (von englisch: **L**iquid **C**rystal **o**n **S**ilicon).

Vorteilhafterweise ist die Freiformlinse und/oder die weitere Kondensoroptik aus Kunststoff, insbesondere aus Polymethylmethacrylat (PMMA), Polycarbonat (PC) oder aus einem thermoplatischen Cyclo-Olefin-Polymer hergestellt. Derartige Freiformlinsen weisen eine hohe thermische Stabilität und eine geringe Temperaturausdehnung auf, so dass die optischen Eigenschaften weitgehend unbeeinflusst von der Umgebungstemperatur bleiben. Die Herstellung der Freiformlinse kann im Spritzgussverfahren erfolgen, wobei aber auch eine Fertigung durch Bearbeitung eines Rohlings auf einer CNC-Fräse oder durch ein Rapid-Prototyping-Verfahren (z.B. 3D-Druck oder Stereolithografie) erfolgen kann. Insbesondere können zumindest in die Freiformlinse Bauteilhalterungen und/oder -fassungen, Befestigungs- und/oder Justageelemente für einen eindeutigen Einbau zur Vermeidung von Montagefehlern und/oder Lichtleiterstrukturen zur Weiterleitung von reflektiertem Licht bzw. Streulicht zu Monitor-Photodioden, die zur Überwachung und/oder Regelung der Ausgangsleistung der Lichtquelle genutzt werden können, integriert sein. Grundsätzlich können die Freiformlinse, die weitere Kondensoroptik und/oder weitere optische Elemente auch aus Glas hergestellt sein.

Die Aufgabe der Erfindung wird ferner durch ein Abbildungssystem mit den Merkmalen des nebengeordneten Anspruchs gelöst. Das Abbildungssystem umfasst ein Beleuchtungssystem nach einer der vorhergehenden Ausgestaltungen und ein abbildendes Empfangssystem zum Erzeugen von elektronischen Abbildern des durch das Beleuchtungssystem beleuchteten Objektfeldes, wobei das Empfangssystem zumindest eine Empfangsoptik und zumindest einen Bildsensor zur Umwandlung einer durch die Empfangsoptik auf dem zumindest einen Bildsensor erzeugten Abbildung in ein elektronisches Abbild aufweist, wobei die Freiformlinse des Beleuchtungssystems derart ausgelegt ist, dass die Lichtintensität der Beleuchtung in dem Objektfeld zu Randbereichen des Objektfeldes hin um ein Maß zunimmt, welches einen Randlichtabfall zumindest des Empfangssystems kompensiert. Der durch das Beleuchtungssystem kompensierte Randlichtabfall wird zumindest bezogen auf die Fläche des Bildsensors kompensiert. Eine Kompensation eines Randlichtabfalls über die gesamte Apertur des Empfangs- bzw. Beleuchtungssystems muss nicht zwingend erfolgen.

Das Abbildungssystem kann insbesondere zum Erzeugen von dreidimensionalen Bildern, insbesondere unter Ausnutzung des Lichtlaufzeitprinzips oder dem stereoskopischen Prinzip, ausgelegt sein.

Weitere vorteilhafte Ausführungsformen der Erfindung ergeben sich aus den Unteransprüchen, der Beschreibung und der Zeichnung.

Die Erfindung wird nachfolgend anhand eines Ausführungsbeispiels erläutert. Es zeigen:

Fig. 1    in schematischer Darstellung ein erfindungsgemäßes Abbildungssystem mit einem erfindungsgemäßen Beleuchtungssystem gemäß einem Ausführungsbeispiel;

Fig. 2    Diagramme von gemittelten Signalverläufen in x- und y-Richtung eines von einem Bildsensor aufgenommenen Bildes eines homogen remittierenden Objekts, welches ohne Randlichtüberhöhung beleuchtet wurde; und

Fig. 3    Diagramme von gemittelten Signalverläufen in x- und y-Richtung eines von einem Bildsensor aufgenommenen Bildes eines homogen remittierenden Objekts, welches mit Randlichtüberhöhung beleuchtet wurde.

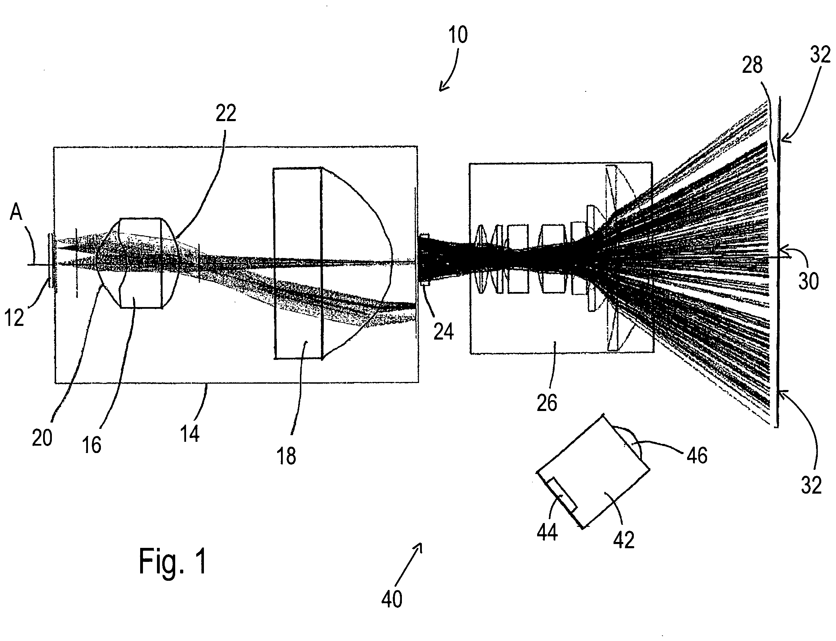

Fig. 1 zeigt ein Beleuchtungssystem 10 zur Beleuchtung eines Objektfeldes 28, in welchem ein zu beleuchtendes Objekt oder eine Szene angeordnet sein kann. Das Beleuchtungssystem 10 umfasst eine Lichtquelle 12, welche im vorliegenden Ausführungsbeispiel als Flächenlichtquelle, beispielsweise VCSEL-Array, ausgebildet ist. Das von der Lichtquelle 12 emittierte Licht wird von einer Kondensoranordnung 14 geformt, welche sich unmittelbar an die Lichtquelle 12 anschließt.

Die Kondensoranordnung 14 umfasst eine der Lichtquelle 12 zugewandte Freiformlinse 16 und eine in Ausbreitungsrichtung des Lichts hinter der Freiformlinse 16 angeordnete weitere Kondensoroptik 18.

Die Freiformlinse 16 weist auf ihrer der Lichtquelle 12 zugewandten Seite eine Freiformfläche 20 auf, deren Gestalt nachfolgend noch näher beschrieben wird.

Die andere, der Lichtquelle 12 abgewandte Seite der Freiformlinse 16 ist als konvexe Fläche 22 ausgestaltet, wobei die Krümmung beispielsweise sphärisch oder asphärisch ausgebildet sein kann. Das die Kondensoranordnung 14 verlassende Licht kann wahlweise durch Strukturierungsmittel 24, beispielsweise ein Mikrolinsenarray, strukturiert werden, um im Objektfeld 28 eine strukturierte Beleuchtung, beispielsweise ein Punkt- oder Streifenlichtmuster zu erzeugen.

Das aus der Kondensoranordnung 14 bzw. dem Strukturierungsmittel 24 austretende Licht wird durch ein nachgeordnetes Projektionsobjektiv 26 nochmals umgeformt, so dass das Objektfeld 28 mit einer Randlichtüberhöhung ausgeleuchtet wird, so dass die Lichtintensität in Randbereichen 32 des Objektfeldes 28 höher ist als in einem zentralen Bereich 30. Das Projektionsobjektiv 26 kann mehrere Linsen und/oder Optiken umfassen.

Die Lichtintensität in den Randbereichen 32 ist in den Randbereichen 32 beispielsweise maximal um einen Faktor 3 höher als die Lichtintensität in dem zentralen Bereich 30.

Die Freiformfläche 20 der Freiformlinse 16 kann beispielsweise durch ein Polynom Z (X, Y) beschrieben werden, wobei durch die Koordinaten X, Y, Z ein Punkt auf einer Oberfläche der Freiformlinse 16 in einem kartesischen Koordinatensystem mit der optischen Achse A des Beleuchtungssystems entlang der Z-Richtung definiert wird. Z beschreibt den Abstand der Oberfläche der Freiformfläche von einer lotrecht auf der optischen Achse A stehenden Referenzebene beim Koordinatenpaar (X, Y). Das Polynom Z (X, Y) ist beispielsweise ein Polynom sechsten Grades in der Form

$$Z\left(X,Y\right) = \sum_{ij} a_{ij} \cdot X^i \cdot Y^j$$

mit $i + j \le 6$, wobei die einzelnen Monome dieses maximal 27 Monome oder Terme umfassenden Polynoms beispielsweise durch die in der nachfolgenden Tabelle 1 aufgeführten Koeffizienten $a_{ij}$ definiert sind:

(Tabelle 1)

| Koeffizient für | | | |
|---|---|---|---|
| Koeffizient für | X1Y0 | : | 0 |
| Koeffizient für | X0Y1 | : | 0 |
| Koeffizient für | X2Y0 | | 0.45790771 |
| Koeffizient für | X1Y1 | : | 0 |
| Koeffizient für | X0Y2 | | 0.39161522 |
| Koeffizient für | X3Y0 | : | 0 |
| Koeffizient für | X2Y1 | : | 0 |
| Koeffizient für | X1Y2 | : | 0 |
| Koeffizient für | X0Y3 | : | 0 |
| Koeffizient für | X4Y0 | : | -0.078594514 |
| Koeffizient für | X3Y1 | : | 0 |
| Koeffizient für | X2Y2 | : | 0.085959677 |

(fortgesetzt)

| | | | |
|---|---|---|---|
| Koeffizient für | X1Y3 | : | 0 |
| Koeffizient für | X0Y4 | : | -0.11448275 |
| Koeffizient für | X5Y0 | : | 0 |
| Koeffizient für | X4Y1 | : | 0 |
| Koeffizient für | X3Y2 | : | 0 |
| Koeffizient für | X2Y3 | : | 0 |
| Koeffizient für | X1Y4 | : | 0 |
| Koeffizient für | X0Y5 | : | 0 |
| Koeffizient für | X6Y0 | | 0.010178214 |
| Koeffizient für | X5Y1 | : | 0 |
| Koeffizient für | X4Y2 | : | -0.039721571 |
| Koeffizient für | X3Y3 | : | 0 |
| Koeffizient für | X2Y4 | : | -0.036141881 |
| Koeffizient für | X1Y5 | : | 0 |
| Koeffizient für | X0Y6 | : | 0.028843896 |

Die Freiformlinse 16 erzeugt eine stark negativ, d.h. tonnenförmig verzeichnete Abbildung, wobei das Maß der Verzeichnung typischerweise zwischen 10 und 30 % liegt. Durch eine unterschiedliche Brennweite in X- und Y-Richtung, d.h. durch eine Ausgestaltung der Freiformlinse 16 als anamorphotische Optik, kann eine Anpassung des Seitenverhältnisses der Lichtquelle an das Seitenverhältnis eines zur Erfassung der beleuchteten Szene vorgesehenen Bildsensors erzielt werden.

Die Freiformlinse 16 kann, muss aber nicht zwingendermaßen einen Beitrag zur Durchmischung des von Einzellichtquellen einer Flächenlichtquelle emittierten Lichts leisten. Eine derartige Durchmischung kann insbesondere durch eine geeignete Defokussierung der einzelnen Optiken der Kondensoranordnung 14 und/oder des Projektionsobjektivs 26 erfolgen. So kann ein Ausfall einer Einzellichtquelle bzw. eines Einzelemitters oder eines Clusters von mehreren Einzellichtquellen, z.B. eines Clusters von 3 x 3 Einzellichtquellen, kompensiert werden, ohne dass eine lokale, ausfallbedingte Inhomogenität bei der Ausleuchtung des Objektfelds entsteht. Die Durchmischung kann durch Einfügung von weiteren optischen Elementen, insbesondere Linsen oder Streuscheiben, an geeigneter Stelle im Strahlengang des Beleuchtungssystems 10 verbessert werden.

Das vorstehend beschriebene Beleuchtungssystem 10 kann Bestandteil eines Bildverarbeitungs- oder Abbildungssystems 40 sein, welches neben dem Beleuchtungssystem 10 zusätzlich auch ein Empfangssystem 42 umfasst. Das Empfangssystem 42 ist in Fig. 1 nur rein schematisch dargestellt und umfasst einen Bildsensor 44 und eine Abbildungsoptik 46, welche dazu ausgelegt ist, ein Abbild des Objektfeldes 28 auf dem Bildsensor 44 zu erzeugen.

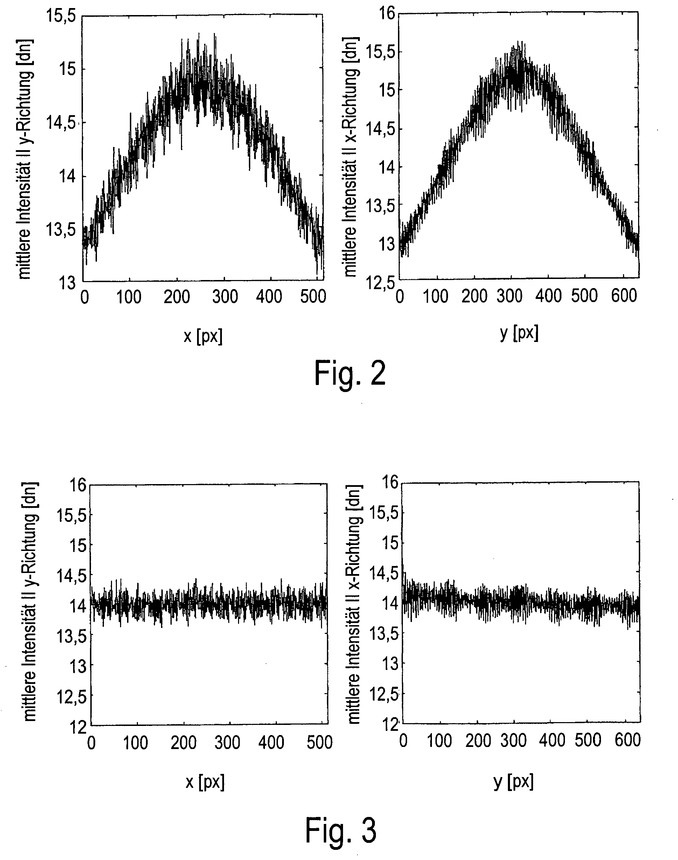

Fig. 2 und 3 zeigen Diagramme von gemittelten Signalverläufen in x- bzw. y-Richtung eines von einem Bildsensor aufgenommenen Bildes eines homogen remittierenden Objekts, welches ohne Randlichtüberhöhung (Fig. 2) bzw. mit dreifacher Randlichtüberhöhung (Fig. 3) beleuchtet wurde. In den Diagrammen ist die Signalintensität in linearer Darstellung über der Position auf dem Sensor in x- bzw. y-Richtung (in Pixeln) aufgetragen, wobei über alle Zeilen bzw. über alle Spalten des Bildes gemittelt wurde und daher das resultierende Signalverhältnis zwischen Maximum und Minimum der Kurven von Fig. 2 kleiner als drei ist.

Wie ein Vergleich von Fig. 2 und 3 zeigt, kann für ein beispielhaftes Abbildungssystem 40 der Randlichtabfall im Gesamtsystem, d.h. der Randlichtabfall im Beleuchtungssystem 10 und im Empfangssystem 42 mittels einer bis zu dreifachen oder noch größeren Randlichtüberhöhung vollständig kompensiert werden.

**Bezugszeichenliste**

| | |
|---|---|
| 10 | Beleuchtungssystem |
| 12 | Lichtquelle |
| 14 | Kondensoranordnung |
| 16 | Freiformlinse |
| 18 | Kondensoroptik |
| 20 | Freiformfläche |
| 22 | konkave Fläche |
| 24 | Strukturierungsmittel |
| 26 | Projektionsobjektiv |
| 28 | Objektfeld |
| 30 | zentraler Bereich |
| 32 | Randbereich |
| 40 | Abbildungssystem |
| 42 | Empfangssystem |
| 44 | Bildsensor |
| 46 | Abbildungsoptik |

A    optische Achse

**Patentansprüche**

1.  Beleuchtungssystem (10) zur Beleuchtung eines Objektfeldes (28), insbesondere zur Beleuchtung einer Szene,
    mit einer Lichtquelle (12) und mit einer Kondensoranordnung (14) zum Bündeln des von der Lichtquelle (12) emittierten Lichts,
    **dadurch gekennzeichnet,**
    **dass** die Kondensoranordnung (14) eine Freiformlinse (16) umfasst, welche dazu ausgelegt ist, das Objektfeld (28) derart zu beleuchten, dass die Lichtintensität der Beleuchtung in dem Objektfeld (28) zu Randbereichen (32) des Objektfeldes (28) hin zunimmt.

2.  Beleuchtungssystem (10) nach Anspruch 1,
    **dadurch gekennzeichnet,**
    **dass** die Freiformlinse (16) derart ausgelegt ist, dass die Lichtintensität der Beleuchtung in dem Objektfeld (28) zu Randbereichen (32) des Objektfeldes (28) hin um ein Maß zunimmt, welches einen Randlichtabfall zumindest eines einen Bildsensor (44) aufweisenden Empfangssystems, welches zur Abbildung zumindest des Objektfeldes (28) vorgesehen ist, kompensiert.

3.  Beleuchtungssystem (10) nach Anspruch 1 oder 2,
    **dadurch gekennzeichnet,**
    **dass** die Freiformlinse (16) derart ausgelegt ist, dass sich die minimale und die maximale Lichtintensität in dem beleuchteten Objektfeld (28) mindestens um einen Faktor 1,5, bevorzugt mindestens um einen Faktor 2, besonders bevorzugt mindestens um einen Faktor 3, unterscheiden.

4.  Beleuchtungssystem (10) nach einem der vorhergehenden Ansprüche, **dadurch gekennzeichnet,**
    **dass** die Freiformlinse (16) ferner dazu ausgelegt ist, in dem Objektfeld (28) eine vorgegebene Lichtverteilung, insbesondere eine einen Gradienten aufweisende Lichtverteilung, zusätzlich zu der genannten Zunahme der Lichtintensität der Beleuchtung in dem Objektfeld (28) zu Randbereichen (32) des Objektfeldes (28) hin zu erzeugen.

5.  Beleuchtungssystem (10) nach einem der vorhergehenden Ansprüche, **dadurch gekennzeichnet,**
    **dass** die Kondensoranordnung (14) ferner eine weitere Kondensoroptik (18) umfasst, welche in Ausbreitungsrichtung des von der Lichtquelle (12) emittierten Lichts betrachtet hinter der Freiformlinse (16) angeordnet ist und zumindest dazu ausgelegt ist, die Freiformlinse (16) verlassendes Licht zu kollimieren.

6.  Beleuchtungssystem (10) nach Anspruch 5,
    **dadurch gekennzeichnet,**
    **dass** die weitere Kondensoroptik (18) ein oder mehrere Optikelemente umfasst, welche aus einer Gruppe von Optikelementen ausgewählt sind, welche insbesondere sphärische und asphärische Optiken, Fresneloptiken, Linsenpaare, Freiformelemente und Streuscheiben umfasst.

7.  Beleuchtungssystem (10) nach Anspruch 5 oder 6,
    **dadurch gekennzeichnet,**
    **dass** die Lichtquelle (12) ein Array von mehreren Einzellichtquellen umfasst, und
    **dass** die weitere Kondensoroptik (18) ferner dazu ausgelegt ist, eine Durchmischung der jeweiligen von den Einzellichtquellen emittierten Lichtstrahlen zu bewirken.

8.  Beleuchtungssystem (10) nach einem der vorhergehenden Ansprüche, **dadurch gekennzeichnet,**
    **dass** ferner ein der Kondensoranordnung (14) - in Ausbreitungsrichtung des von der Lichtquelle (12) emittierten Lichts betrachtet - nachgeordnetes Projektionsobjektiv (26) vorgesehen ist.

9. Beleuchtungssystem (10) nach einem der vorhergehenden Ansprüche, **dadurch gekennzeichnet, dass** die Freiformlinse (16) als Konvexlinse mit zumindest einer konvexen Seite, insbesondere als Bikonvexlinse, ausgebildet ist, wobei die konvexe Seite oder zumindest eine der konvexen Seite als Freiformfläche (20) ausgebildet ist.

10. Beleuchtungssystem (10) nach Anspruch 9, **dadurch gekennzeichnet, dass** die Freiformfläche (20) der Lichtquelle (12) zugewandt ist.

11. Beleuchtungssystem (10) nach Anspruch 9 oder 10, **dadurch gekennzeichnet, dass** die Krümmung der Freiformfläche (20) durch ein Polynom vierten oder höheren Grades, bevorzugt durch ein Polynom sechsten bis achten Grades, insbesondere durch ein Polynom sechsten Grades bestimmt ist.

12. Beleuchtungssystem (10) nach Anspruch 11, **dadurch gekennzeichnet, dass** das Polynom ein Polynom in den Variablen *X* und *Y* ist, wobei das Polynom zumindest eine der folgenden Bedingungen erfüllt:

- Koeffizienten derjenigen Monome, bei denen zumindest ein Exponent der Variablen ungerade ist, weisen den Wert Null auf;
- der Koeffizient eines Monoms mit den Variablen $X^i Y^j$, und der Koeffizient eines Monoms mit den Variablen $X^j Y^i$ weisen bei gleichem *i* und gleichem *j* dasselbe Vorzeichen auf; und
- die zweite Ableitung des Polynoms weist keine Nullstellen auf.

13. Beleuchtungssystem (10) nach einem der vorhergehenden Ansprüche, **dadurch gekennzeichnet, dass** die Lichtquelle (12) eine Einzellichtquelle, insbesondere eine LED oder ein Laser, ist, oder eine Flächenlichtquelle, insbesondere ein Array von mehreren Einzellichtquellen, bevorzugt ein Array von mehreren LEDs oder mehreren Lasern, ist.

14. Beleuchtungssystem (10) nach einem der vorhergehenden Ansprüche, **dadurch gekennzeichnet, dass** die Freiformlinse (16) ferner dazu ausgelegt ist, den Strahlengang des Beleuchtungssystems (10) derart anzupassen, dass die Flächenform des beleuchteten Objektfeldes (28) von der Flächenform einer Lichtaustrittsfläche der Lichtquelle (12) oder einer den Strahlengang begrenzenden Blende derart abweicht, dass die genannten Flächenformen bezüglich ihrer Umgrenzungen nicht durch eine geometrische Ähnlichkeitsabbildung ineinander überführt werden können.

15. Beleuchtungssystem (10) nach einem der vorhergehenden Ansprüche, **dadurch gekennzeichnet, dass** das Beleuchtungssystem (10) Mittel zur Strukturierung (24) der Beleuchtung in dem Objektfeld (28), insbesondere ein Mikrolinsenarray, aufweist.

16. Beleuchtungssystem (10) nach einem der vorhergehenden Ansprüche, **dadurch gekennzeichnet, dass** zumindest die Freiformlinse (16) aus Kunststoff, insbesondere aus Polymethylmethacrylat (PMMA), Polycarbonat (PC) oder aus einem thermoplastischen Cyclo-Olefin-Polymer, hergestellt ist.

17. Beleuchtungssystem (10) nach einem der vorhergehenden Ansprüche, **dadurch gekennzeichnet, dass** zumindest in die Freiformlinse (16) Befestigungs- und/oder Justageelemente und/oder Lichtleiterstrukturen integriert sind.

18. Abbildungssystem (40) mit einem Beleuchtungssystem (10) nach einem der vorhergehenden Ansprüche und mit einem abbildenden Empfangssystem (42) zum Erzeugen von elektronischen Abbildern des durch das Beleuchtungssystem (10) beleuchteten Objektfeldes (28), wobei das Empfangssystem (42) zumindest eine Abbildungsoptik (46) und zumindest einen Bildsensor (44) zur Umwandlung einer durch die Abbildungsoptik (46) auf dem zumindest einen Bildsensor (44) erzeugten Abbildung in ein elektronisches Abbild aufweist, wobei die Freiformlinse (16) des Beleuchtungssystems (10) derart ausgelegt ist, dass die Lichtintensität der Beleuchtung in dem Objektfeld (28) zu Randbereichen (32) des Objektfeldes (28) hin um ein Maß zunimmt, welches einen Randlichtabfall zumindest des Empfangssystems (42) kompensiert.

19. Abbildungssystem (40) nach Anspruch 18, **dadurch gekennzeichnet, dass** das Abbildungssystem (40) zum Erzeugen von dreidimensionalen Bildern, insbesondere unter Ausnutzung des Lichtlaufzeitprinzips oder dem stereoskopischen Prinzip, ausgelegt ist.

**Claims**

1. An illumination system (10) for illuminating an object field (28), in particular for illuminating a scene, having a light source (12) and having a condenser arrangement (14) for bundling the light emitted by the light source (12),

**characterized in that**
the condenser arrangement (14) comprises a free-form lens (16) which is configured to illuminate the object field (28) such that the light intensity of the illumination in the object field (28) increases toward marginal regions (32) of the object field (28).

2. An illumination system (10) in accordance with claim 1,
**characterized in that**
the free-form lens (16) is configured such that the light intensity of the illumination in the object field (28) increases toward marginal regions (32) of the object field (28) by a degree which compensates a light falloff at the margins of at least one reception system which has an image sensor (44) and which is provided for imaging at least the object field (28).

3. An illumination system (10) in accordance with claim 1 or claim 2, **characterized in that**
the free-form lens (16) is configured such that the minimal light intensity and the maximum light intensity in the illuminated object field (28) differ at least by a factor of 1.5, preferably at least by a factor of 2, particularly preferably at least by a factor of 3.

4. An illumination system (10) in accordance with any one of the preceding claims,
**characterized in that**
the free-form lens (16) is furthermore configured to produce a predefined light distribution, in particular a light distribution having a gradient, in the object field (28) in addition to said increase in the light intensity of the illumination in the object field (28) toward marginal regions (32) of the object field (28).

5. An illumination system (10) in accordance with any one of the preceding claims,
**characterized in that**
the condenser arrangement (14) furthermore comprises a further condenser optics (18) which is arranged behind the free-form lens (16), viewed in the direction of propagation of the light emitted by the light source (12), and which is at least configured to collimate light leaving the free-form lens (16).

6. An illumination system (10) in accordance with claim 5,
**characterized in that**
the further condenser optics (18) comprises one or more optical elements which are selected from a group of optical elements which in particular comprises spherical and aspherical optics, Fresnel optics, lens pairs, free-form elements and diffusor lenses.

7. An illumination system (10) in accordance with claim 5 or claim 6, **characterized in that**

the light source (12) comprises an array of a plurality of individual light sources; and
**in that** the further condenser optics (18) is furthermore configured to effect a mixing of the respective light beams emitted by the individual light sources.

8. An illumination system (10) in accordance with any one of the preceding claims,
**characterized in that**
a projection objective (26) arranged downstream of the condenser arrangement (14) - viewed in the direction of propagation of the light emitted by the light source (12) - is furthermore provided.

9. An illumination system (10) in accordance with any one of the preceding claims,
**characterized in that**
the free-form lens (16) is configured as a convex lens having at least one convex side, in particular as a biconvex lens, with the convex side or at least one of the convex sides being configured as a free-form surface (20).

10. An illumination system (10) in accordance with claim 9,
**characterized in that**
the free-form surface (20) faces the light source (12).

11. An illumination system (10) in accordance with claim 9 or claim 10, **characterized in that**
the curvature of the free-form surface (20) is determined by a fourth degree polynomial or a higher degree polynomial, preferably by a sixth to eighth degree polynomial, in particular by a sixth degree polynomial.

12. An illumination system (10) in accordance with claim 11,
**characterized in that**
the polynomial is a polynomial in the variables $X$ and $Y$, with the polynomial satisfying at least one of the following conditions:

- coefficients of those monomials in which at least one exponent of the variables is an odd number have the value zero;
- the coefficient of a monomial having the variables $X^i Y^j$ and the coefficient of a monomial having the variables $X^j Y^i$ have the same sign when $i$ and $j$ are the same; and
- the second derivation of the polynomial does not have any zero points.

13. An illumination system (10) in accordance with any one of the preceding claims,
**characterized in that**
the light source (12) is an individual light source, in particular an LED or a laser,

or an areal light source, in particular an array of a plurality of individual light sources, preferably an array of a plurality of LEDS or of a plurality of lasers.

14. An illumination system (10) in accordance with any one of the preceding claims,
**characterized in that**
the free-form lens (16) is furthermore configured to adapt the optical path of the illumination system (10) such that the surface shape of the illuminated object field (28) differs from the surface shape of a light exit surface of the light source (12) or of an aperture bounding the optical path such that said surface shapes cannot be merged into one another with respect to their boundaries by a geometrical similarity transformation.

15. An illumination system (10) in accordance with any one of the preceding claims,
**characterized in that**
the illumination system (10) has means for structuring (24) the illumination in the object field (28), in particular a microlens array.

16. An illumination system (10) in accordance with any one of the preceding claims,
**characterized in that**
at least the free-form lens (16) is manufactured from plastic, in particular from polymethyl methacrylate (PMMA), from polycarbonate (PC) or from a thermoplastic cyclic olefin polymer.

17. An illumination system (10) in accordance with any one of the preceding claims,
**characterized in that**
fastening elements and/or adjustment elements and/or light guide structures are at least integrated into the free-form lens (16).

18. An imaging system (40) having an illumination system (10) in accordance with any one of the preceding claims and having an imaging reception system (42) for producing electronic images of the object field (28) illuminated by the illumination system (10), wherein the reception system (42) has at least one imaging optics (46) and at least one image sensor (44) for converting an image produced by the imaging optics (46) on the at least one image sensor (44) into an electronic image, wherein the free-form lens (16) of the illumination system (10) is configured such that the light intensity of the illumination in the object field (28) increases toward marginal regions (32) of the object field (28) by a degree which compensates a light falloff at the margins of at least the reception system (42).

19. An imaging system (40) in accordance with claim 18,
**characterized in that**

the imaging system (40) is configured to produce three-dimensional images, in particular while using the time-of-flight principle or the stereoscopic principle.

**Revendications**

1. Système d'éclairage (10) pour éclairer un champ d'objet (28), en particulier pour éclairer une scène, comportant une source de lumière (12) et un ensemble de condenseur (14) pour focaliser la lumière émise par la source de lumière (12),
**caractérisé en ce que**
l'ensemble de condenseur (14) comprend une lentille (16) de forme libre qui est conçue pour éclairer le champ d'objet (28) de telle sorte que l'intensité lumineuse de l'éclairage dans le champ d'objet (28) augmente vers les zones de bord (32) du champ d'objet (28).

2. Système d'éclairage (10) selon la revendication 1,
**caractérisé en ce que**
la lentille (16) de forme libre est conçue pour que l'intensité lumineuse de l'éclairage dans le champ d'objet (28) augmente vers les zones de bord (32) du champ d'objet (28) d'une valeur qui compense une atténuation de lumière de bord d'au moins un système récepteur comprenant un capteur d'images (44), qui est prévu pour la représentation au moins du champ d'objet (28).

3. Système d'éclairage (10) selon la revendication 1 ou 2,
**caractérisé en ce que**
la lentille (16) de forme libre est conçue de telle sorte que les intensités lumineuses minimale et maximale dans le champ d'objet (28) éclairé se distinguent au moins d'un facteur de 1,5, de préférence au moins d'un facteur de 2, de manière particulièrement préférée au moins d'un facteur de 3.

4. Système d'éclairage (10) selon l'une des revendications précédentes, **caractérisé en ce que**
la lentille (16) de forme libre est en outre conçue pour générer une répartition de lumière donnée dans le champ d'objet (28), en particulier une répartition de lumière présentant un gradient, en supplément à ladite augmentation de l'intensité lumineuse de l'éclairage dans le champ d'objet (28) vers les zones de bord (32) du champ d'objet (28).

5. Système d'éclairage (10) selon l'une des revendications précédentes, **caractérisé en ce que**
l'ensemble de condenseur (14) comprend en outre une autre optique de condenseur (18) qui est agencée derrière la lentille (16) de forme libre, vue en direction de propagation de la lumière émise par la source de lumière (12), et qui est au moins conçue pour collimater la lumière quittant la lentille (16) de forme libre.

6. Système d'éclairage (10) selon la revendication 5, **caractérisé en ce que**
l'autre optique de condenseur (18) comprend un ou plusieurs éléments optiques qui sont choisis parmi un groupe d'éléments optiques comprenant en particulier des optiques sphériques et asphériques, des optiques de Fresnel, des paires de lentilles, des éléments de forme libre et des disques diffuseurs.

7. Système d'éclairage (10) selon la revendication 5 ou 6,
**caractérisé en ce que**
la source de lumière (12) comprend un réseau de plusieurs sources de lumière individuelles, et l'autre optique de condenseur (18) est en outre conçue pour procurer un mélange des rayons lumineux respectifs émis par les sources de lumière individuelles.

8. Système d'éclairage (10) selon l'une des revendications précédentes, **caractérisé en ce que**
il est en outre prévu un objectif de projection (26) agencé en aval de l'ensemble de condenseur (14), vu en direction de propagation de la lumière émise par la source de lumière (12).

9. Système d'éclairage (10) selon l'une des revendications précédentes, **caractérisé en ce que**
la lentille (16) de forme libre est réalisée sous forme de lentille convexe ayant au moins une face convexe, en particulier sous forme de lentille bi-convexe, la face convexe ou l'une au moins des faces convexes étant réalisée sous forme de surface (20) de forme libre.

10. Système d'éclairage (10) selon la revendication 9, **caractérisé en ce que**
la surface (20) de forme libre est tournée vers la source de lumière (12).

11. Système d'éclairage (10) selon la revendication 9 ou 10,
**caractérisé en ce que**
la courbure de la surface (20) de forme libre est déterminée par un polynôme de quatrième degré ou de degré plus élevé, de préférence par un polynôme de sixième degré à huitième degré, en particulier par un polynôme de sixième degré.

12. Système d'éclairage (10) selon la revendication 11, **caractérisé en ce que**
le polynôme est un polynôme dans les variables $X$ et $Y$, le polynôme satisfaisant l'une au moins des conditions suivantes :

- les coefficients de ceux des monômes pour lesquels au moins un exposant des variables est impair présentent la valeur zéro ;
- le coefficient d'un monôme avec les variables $X^i Y^j$ et le coefficient d'un monôme avec les variables $X^j Y^i$ présentent le même signe, $i$ étant égal et $j$ étant égal ; et
- la dérivée seconde du polynôme ne présente pas de zéro.

13. Système d'éclairage (10) selon l'une des revendications précédentes, **caractérisé en ce que**
la source de lumière (12) est une source de lumière individuelle, en particulier une diode électroluminescente ou un laser,
ou elle est une source de lumière surfacique, en particulier un réseau de plusieurs sources de lumière individuelles, de préférence un réseau de plusieurs diodes électroluminescentes ou de plusieurs lasers.

14. Système d'éclairage (10) selon l'une des revendications précédentes, **caractérisé en ce que**
la lentille (16) de forme libre est en outre conçue pour adapter le chemin optique du système d'éclairage (10) de telle sorte que la forme surfacique du champ d'objet (28) éclairé diffère de la forme surfacique d'une surface de sortie de lumière de la source de lumière (12) ou d'un diaphragme délimitant le chemin optique, et qu'à l'égard de leurs contours lesdites formes surfaciques ne peuvent pas être transférées l'une vers l'autre par une représentation de similarité géométrique.

15. Système d'éclairage (10) selon l'une des revendications précédentes, **caractérisé en ce que**
le système d'éclairage (10) comprend des moyens de structuration (24) de l'éclairage dans le champ d'objet (28), en particulier un réseau de microlentilles.

16. Système d'éclairage (10) selon l'une des revendications précédentes, **caractérisé en ce que**
au moins la lentille (16) de forme libre est réalisée en matière plastique, en particulier en polyméthacrylate de méthyle (PMMA), en polycarbonate (PC) ou en un polymère de cyclo-oléfine thermoplastique.

17. Système d'éclairage (10) selon l'une des revendications précédentes, **caractérisé en ce que**
des éléments de fixation et/ou d'ajustage et/ou des structures de guide de lumière sont intégrés au moins dans la lentille (16) de forme libre.

18. Système d'imagerie (40) comportant un système d'éclairage (10) selon l'une des revendications précédentes et comportant un système récepteur (42) d'imagerie pour produire des imageurs électroniques du champ d'objet (28) éclairé par le système d'éclairage, le système récepteur (42) comprenant au moine une optique d'imagerie (46) et au moins un capteur d'images (44) pour convertir une image générée par l'optique d'imagerie (46) sur ledit au moins un capteur d'images (44) en une image électronique, la lentille (16) de forme libre du système d'éclairage (10) étant conçue de telle sorte que l'intensité lumineuse de l'éclairage dans le champ d'objet (28) augmente vers des zones de bord (32) du champ d'objet (28) d'une valeur qui compense une atténuation de lumière de bord au moins du système récepteur (42).

19. Système d'imagerie (40) selon la revendication 18, **caractérisé en ce que**
le système d'imagerie (40) est conçu pour produire des images tridimensionnelles, en particulier en ayant recours au principe du temps de parcours de lumière ou au principe stéréoscopique.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014185018 A1
- US 2007001104 A1
- US 2005265014 A1
- JP H05107638 A